# EUROPÄISCHE PATENTSCHRIFT

(11) **EP 4 620 280 B1**
(45) Veröffentlichungstag und Bekanntmachung des Hinweises auf die Patenterteilung: **30.09.2026**
(21) Anmeldenummer: 25159978.3
(22) Anmeldetag: 25.02.2025
(51) Int. Cl.: A01B 71/02, A01B 63/111

(54) **VERFAHREN ZUM ERMITTELN EINER KORREKTUREINSTELLUNG FÜR EINEN PFLUG**
METHOD FOR DETERMINING A CORRECT ADJUSTMENT FOR A PLOUGH
MÉTHODE DE DÉTERMINATION D'UN RÉGLAGE DE CORRECTION POUR UNE CHARRUE

(30) Priorität: 26.02.2024 DE 102024105254
(43) Veröffentlichungstag der Anmeldung: 24.09.2025
(73) Patentinhaber: LEMKEN GmbH & Co. KG, 46519 Alpen (DE)
(72) Erfinder: Röttgermann, Sebastian, 47608 Geldern (DE); Albrecht, David, 46483 Wesel (DE)

(56) Entgegenhaltungen:
- EP-A1- 3 729 940
- EP-A1- 4 133 926
- DE-A1- 102021 132 869

## Beschreibung

Die Erfindung betrifft ein Verfahren zum Ermitteln von zumindest einer Korrektureinstellung für einen landwirtschaftlichen Pflug nach dem Oberbegriff des Patentanspruchs 1, eine Steuerungsvorrichtung zum Einstellen von zumindest einer Korrektureinstellung an einem landwirtschaftlichen Pflug nach dem Oberbegriff des Patentanspruchs 15 und einen Maschinenverbund nach dem Oberbegriff des Patentanspruchs 17.

Mit einem Pflug wird die Ackerkrume gelockert und gewendet, mit dem Ziel der Durchlüftung des Bodens und der schnelleren/besseren Erwärmung dessen, um damit die Zersetzung organischer Reste zu fördern. Eingearbeitetes organisches Material, soll dabei vollständig bedeckt werden. Weiterhin ist die Bekämpfung von Beikräutern und tierischen Schädlingen ein Ziel, sowie eine Lockerung des Bodens und/oder der Grundbodenbearbeitung vor einer Saatbettbereitung.

Zur Verbringung zwischen der Furchenarbeitsposition und der Onland-Arbeitsposition und zur Einstellung verschiedener Arbeitseinstellungen, wie Vorderfurchenbreite bzw. dem Abstand zwischen der Reifenkante des Zugfahrzeugs und der Furchenkante, umfassen beispielsweise Aufsatteldrehpflüge einen Verstellaktor. Mittels des Verstellaktors sind Versatzschwinge und Vorderfurchenschwinge des Pfluges in unterschiedliche Querabstände zwischen Anbaubock und dem in Fahrtrichtung vordersten Pflugkörper bewirkende Stellungen verbringbar.

Aus den Druckschriften EP3729940A1, EP 1 776 851 A1 und EP 1 338 186 A2 ist die automatische Verstellung der Vorderfurchenbreite bekannt. In diesem Zusammenhang wird eine GPS-Antenne direkt am Pflugkörper eingesetzt werden. Alternativ kann die Ortsbestimmung während der Bodenbearbeitung über eine GPS-Antenne am Zugfahrzeug erfolgen.

Aus der EP 3 777 498 A1 ist ferner die Ausgabe von Einstellempfehlungen bekannt. Dort wird neben einer automatischen Anpassung der Maschineneinstellungen auch die Ausgabe der Einstellempfehlung zur manuellen Einstellung durch einen Bediener vorgeschlagen. Hierzu tritt ein Pflug-Einstell-Assistent in einen Dialog mit dem Bediener, um in mehreren Dialogschritten jeweils einzustellende optimierte Maschinenparameter des Pflugs und/oder des Zugfahrzeugs zu ermitteln.

Neben der Einstellung der Vorderfurchenbreite zur Vermeidung von Unregelmäßigkeiten zwischen einer letzten Furche der vorrangegangenen Bearbeitung und einer Vorderfurche als erster Furche der anschließenden Bearbeitung ist die korrekte Einstellung der Seitenneigung des Pfluges zum Boden, die 90° betragen sollte, ein weiterer Aspekt, dessen Nichteinhaltung die Bearbeitungsqualität beim Pflügen negativ beeinflusst.

Dem Bediener des Maschinenverbundes kommt dabei die Aufgabe zu, eine visuelle Kontrolle des Bearbeitungsergebnisses vorzunehmen, um etwaige Korrektureinstellungen manuell vorzunehmen oder durch geeignete Eingaben, die an eine Steuerungsvorrichtung übermittelt werden, zu veranlassen.

Der Erfindung liegt somit die Aufgabe zugrunde, automatisiert zumindest eine Korrektureinstellung für einen von einem Zugfahrzeug gezogenen landwirtschaftlichen Pflug zu bestimmen, um eine automatische Beurteilung der Vorderfurchenbreiteneinstellung und der Neigung des Pflugrahmens zum unbearbeiteten Feldboden zu realisieren, welche mit einer visuellen Beurteilung eines Anwenders zur Bestimmung einer erforderlichen Korrektureinstellung im Wesentlichen übereinstimmt.

Die vorstehend genannte Aufgabe wird durch ein Verfahren mit den Merkmalen des Anspruches 1 gelöst. Weiterhin wird die Aufgabe durch eine Steuerungsvorrichtung mit den Merkmalen des nebengeordneten Anspruches 15 sowie einen Maschinenverbund mit den Merkmalen des nebengeordneten Anspruches 17 gelöst. Vorteilhafte Weiterbildungen sind Gegenstand der Unteransprüche.

Gemäß dem Anspruch 1 wird ein Verfahren zum Ermitteln von zumindest einer Korrektureinstellung für einen von einem Zugfahrzeug gezogenen, einen Pflugrahmen und daran angeordnete Bodenbearbeitungswerkzeuge umfassenden landwirtschaftlichen Pflug während einer Bodenbearbeitung auf einer landwirtschaftlichen Nutzfläche vorgeschlagen. Das erfindungsgemäße Verfahren ist gekennzeichnet durch die nachstehenden Verfahrensschritte:
- Detektion zumindest eines durch die Bodenbearbeitungswerkzeuge hervorgerufenen Bearbeitungsergebnisses und Detektion einer Neigung des Pflugrahmens zur Bodenoberfläche durch zumindest eine endseitig am Pflugrahmen angeordnete Sensoranordnung, welche dem, in Längsrichtung des Pflugrahmens gesehen, letzten Bodenbearbeitungswerkzeug nachgeordnet ist, wobei durch die zumindest eine Sensoranordnung ein der Bodenoberfläche zugewandter flächenförmiger Erfassungsbereich aufgespannt wird,
- Generieren von Messdaten an zumindest zwei beabstandeten Messpunkten innerhalb des Erfassungsbereiches (28), und
- Zuführen der Messdaten an eine Steuerungsvorrichtung des Zugfahrzeuges und/oder des Pfluges zur
- Auswertung durch einen Auswertealgorithmus und zur Bestimmung zumindest einer Korrektureinstellung.

Wesentlich ist die Überlegung, dass sowohl die korrekte Einstellung der Vorderfurchenbreite als auch die präzise Einstellung und Einhaltung der Neigung des Pflugrahmens zum unbearbeiteten Feldboden für das Erreichen eines optimalen Bearbeitungsergebnisses maßgeblich sind. Hierfür werden das zumindest eine Bearbeitungsergebnis und der Neigungswinkel des Pflugrahmens zum unbearbeiteten Feldboden detektiert. Die Detektion von zumindest einem Bearbeitungsergebnis und dem Neigungswinkel soll objektiv bewertet werden und bei wiederkehrenden Zuständen zum im Wesentlichen gleichen Ergebnis führen.

Das erfindungsgemäße Verfahren ermöglicht es, mittels zumindest einer, vorzugsweise genau einer, Sensoranordnung Messdaten bereitzustellen, um darauf basierend zugleich die automatisierte Beurteilung der Vorderfurchenbreiteneinstellung und der Neigung des Pflugrahmens zum unbearbeiteten Feldboden durch die Auswertung der Messdaten mittels des Auswertealgorithmus vorzunehmen. Mit dieser automatisierten Beurteilung kann ein gewünschtes Arbeitsergebnis basierend auf der zumindest einen bestimmten Korrektureinstellung für die Vorderfurchenbreiteneinstellung und die Neigungseinstellung des Pfluges reproduzierbar generiert werden.

Weiter kann bei einer Änderung der Vorderfurchenbreiteneinstellung durch die zumindest eine bestimmte Korrektureinstellung zur Ansteuerung der Aktuatoren eine Überprüfung der Zugpunkteinstellung vorgenommen werden. Dies kann dazu dienen, Wechselwirkungen zwischen einer Änderung der Vorderfurchenbreiteneinstellung und der bestehenden Zugpunkteinstellung zu berücksichtigen. Insbesondere kann die auf der zumindest einen bestimmten Korrektureinstellung basierende Änderung der Vorderfurchenbreiteneinstellung eine Korrektur der Zugpunkteinstellung erfordern.

Bevorzugt kann die zumindest eine Korrektureinstellung zur Ansteuerung von Aktuatoren des Zugfahrzeuges und/oder des Pfluges verwendet werden. Dies kann manuell oder automatisch erfolgen. Eine manuelle Verwendung der zumindest einen Korrektureinstellung kann durch die Freigabe eines Bedieners des Zugfahrzeugs erfolgen. Durch eine automatisierte Verwendung der zumindest einen Korrektureinstellung kann der Bediener entlastet werden.

Insbesondere kann eine Vorderfurchenbreite als ein Bearbeitungsergebnis bestimmt werden. Weiter bevorzugt können Bodenrauheit und/oder Bodenebenheit als ein Bearbeitungsergebnis bestimmt werden. Die Bodenrauheit und/oder die Bodenebenheit lassen sich durch Auswertung der Messdaten mittels des Auswertealgorithmus bestimmen. Hierzu kann anhand der Messdaten ein räumliches Profil des Bodens im Erfassungsbereich bestimmt werden.

Bevorzugt können während der Detektion des zumindest einen durch die Bodenbearbeitungswerkzeuge hervorgerufenen Bearbeitungsergebnisses eine Bestandskante und/oder eine Furchenkante bestimmt werden.

Dabei kann die Bestimmung der Furchenkante zur Unterstützung der Bestimmung einer aktuellen Position des Zugfahrzeuges auf der landwirtschaftlichen Nutzfläche mittels eines Odometriesystems verwendet werden. Die Erkennung der Furchenkante ermöglicht eine Unterstützung der Navigation durch Odometrie.

Durch die zumindest eine Sensoranordnung wird eine Seitenneigung des Zugfahrzeuges und/oder des Pfluges bestimmt. Dies dient dazu, dass die Bodenbearbeitungswerkzeuge über die Arbeitsbreite des Pfluges hinweg mit der gleichen Arbeitstiefe arbeiten und der Pflug parallel zum Boden steht.

Hierzu kann vorgesehen sein, dass die Bestimmung der Seitenneigung durch Auswertung eines linienförmigen Abschnitts des Erfassungsbereiches oder des flächenförmigen Erfassungsbereiches durchgeführt wird.

Weiter bevorzugt kann durch die zumindest eine Sensoranordnung eine Längsneigung des Zugfahrzeuges und/oder des Pfluges in Fahrtrichtung bestimmen.

Hierzu kann die Bestimmung der Seitenneigung durch Auswertung eines punktförmigen und/oder linienförmigen Abschnitts des Erfassungsbereiches oder des flächenförmigen Erfassungsbereiches durchgeführt werden.

Weiterhin kann vorgesehen sein, dass die Bestimmung der Längsneigung in Fahrtrichtung mittels einer Laufzeitmessung von Sensorsignalen durchgeführt wird, die von der zumindest einen Sensoranordnung ausgesandt werden. Hierzu können Messdaten, die im flächenförmigen Erfassungsbereich oder entlang eines linienförmigen Abschnitts des Erfassungsbereiches in Fahrtrichtung erfasst werden, ausgewertet werden.

Die Bestimmung von Seiten- und/oder Längsneigung kann bevorzugt dazu dienen, die Aktuatoren des Zugfahrzeuges und/oder des Pfluges anzusteuern, damit die Bodenbearbeitungswerkzeuge in Quer- und/oder Längsrichtung stets senkrecht zur Bodenoberfläche orientiert sind. Hierdurch lässt sich eine gleichmäßige Arbeitstiefe der Bodenbearbeitungswerkzeuge gewährleisen.

Insbesondere kann die zumindest eine Sensoranordnung zumindest einen berührungslos arbeitenden Sensor aufweisen, durch welchen ein linienförmiger und/oder der flächenförmige Erfassungsbereich erzeugt wird.

Bevorzugt kann als zumindest ein berührungslos arbeitender Sensor ein LiDAR-Sensor, ein Radar-Sensor, eine Kamera und/oder ein Ultraschallsensor verwendet werden. Die genannten Sensoren sind geeignet, sowohl die Vorderfurchenbreite als Bearbeitungsergebnis zu bestimmen als auch die Neigung des Pflugrahmens zum unbearbeiteten Feldboden. Die von einem oder mehreren dieser Sensoren generierten Messdaten ermöglichen es, gleichzeitig daraus die erforderliche zumindest eine Korrektureinstellung für die Vorderfurchenbreiteneinstellung und die Neigungseinstellung zu bestimmen. In Abhängigkeit vom Wirkprinzip können mehrere Sensoren zu einem Sensorarray zusammengefasst werden, um den flächenförmigen Erfassungsbereich bereitzustellen.

Gemäß einer Weiterbildung kann durch den Auswertealgorithmus ein Ist-Profil zweier unmittelbar benachbarter Furchen bestimmt werden, wobei eine Furche eine Vorderfurche und die andere Furche eine durch das letzte Bodenbearbeitungswerkzeug erzeugte Furche einer vorangehenden Bahn ist.

Weiter bevorzugt kann das detektierte Ist-Profil als grafisches 3D-Profil und/oder numerisch wiedergegeben werden, welches mit zumindest einem in der Steuerungsvorrichtung hinterlegten Soll-Profil gleicher Ausprägung verglichen wird.

Durch den Vergleich des Ist-Profils mit dem Soll-Profil kann auf Unregelmäßigkeiten bei der Durchführung der Bodenbearbeitung geschlossen werden.

Eine Unregelmäßigkeit ist eine Erhebung, die zwischen der durch das letzte Bodenbearbeitungswerkzeug erzeugten Furche einer vorangehend abgefahrenen Bahn und der benachbarten Vorderfurche einer nachfolgend abgefahrenen Bahn entsteht. Eine Erhebung entsteht, wenn die Vorderfurchenbreite zu schmal bzw. zu klein eingestellt ist, so dass an der Vorderfurche ein Wall und direkt daneben eine Senke entsteht.

Eine weitere Unregelmäßigkeit ist ein Tal, das zwischen der durch das letzte Bodenbearbeitungswerkzeug erzeugten Furche einer vorangehend abgefahrenen Bahn und der benachbarten Vorderfurche einer nachfolgend abgefahrenen Bahn entsteht. Ein Tal entsteht, wenn die Vorderfurchenbreite zu breit bzw. zu groß eingestellt ist, so dass zwischen Vorderfurche und Anschlussfurche eine Senke zurückbleibt.

So kann beispielsweise für das detektierte Ist-Profil ein Zahlenwert berechnet werden, welcher die Regelmäßigkeit bzw. Unregelmäßigkeit der Bearbeitung angibt. Das Vorzeichen des Zahlenwertes kann die Situation an der Vorderfurche widerspiegeln, ob eine Erhebung oder ein Tal als Unregelmäßigkeit vorliegt. Der absolute Wert kann das Ausmaß der Erhebung bzw. des Tals wiedergeben.

Alternativ oder zusätzlich kann bei einer grafischen Wiedergabe des Ist-Profils als 3D-Profil ein zu erwartendes Ergebnis, welches durch die zur generierten Vorderfurche benachbarten Furchen bekannt ist, mit dem tatsächlichem Ergebnis der Vorderfurche verglichen werden.

Die eingangs gestellte Aufgabe wird weiterhin durch eine Steuerungsvorrichtung mit den Merkmalen des Anspruches 15 gelöst.

Gemäß dem Anspruch 15 wird eine Steuerungsvorrichtung zum Einstellen von zumindest einer Korrektureinstellung für einen von einem Zugfahrzeug gezogenen, einen Pflugrahmen und daran angeordnete Bodenbearbeitungswerkzeuge umfassenden landwirtschaftlichen Pflug während der Bodenbearbeitung auf einer landwirtschaftlichen Nutzfläche vorgeschlagen wobei zumindest eine endseitig am Pflugrahmen angeordnete Sensoranordnung, welche dem, in Längsrichtung des Pflugrahmens gesehen, letzten Bodenbearbeitungswerkzeug nachgeordnet ist, wobei die zumindest eine Sensoranordnung dazu eingerichtet ist, einen der Bodenoberfläche zugewandten flächenförmigen Erfassungsbereich zur Detektion zumindest eines durch die Bodenbearbeitungswerkzeuge hervorgerufenen Bearbeitungsergebnisses und zur Detektion einer Neigung des Pflugrahmens zur Bodenoberfläche aufzuspannen, wobei Messdaten an zumindest zwei beabstandeten Messpunkten innerhalb des Erfassungsbereiches generiert werden, und die Messdaten der Steuerungsvorrichtung zur Auswertung durch einen Auswertealgorithmus und zur Bestimmung der zumindest einen Korrektureinstellung zuzuführen.

Die Steuerungsvorrichtung kann dem Zugfahrzeug und/oder dem Pflug zugeordnet sein.

Insbesondere kann die Steuerungsvorrichtung dazu eingerichtet und ausgeführt sein, die zumindest eine Korrektureinstellung zur Ansteuerung von Aktuatoren des Zugfahrzeuges und/oder des Pfluges verwenden.

Der zumindest eine Auswertealgorithmus kann in einer Speichereinheit der Steuerungsvorrichtung hinterlegt oder hinterlegbar sein.

In einer bevorzugten Ausführungsform der erfindungsgemäßen Steuerungsvorrichtung ist diese dazu ausgeführt und eingerichtet, das Verfahren zum Ermitteln von zumindest einer Korrektureinstellung nach einer der vorstehend beschriebenen Ausführungsformen auszuführen. Hinsichtlich der Vorteile und Modifikationen der erfindungsgemäßen Steuerungsvorrichtung darf auf die erfindungsmäßen Vorteile des Verfahrens verwiesen werden.

Bevorzugt kann die Steuerungsvorrichtung dazu eingerichtet sein, automatisch eine Überprüfung der Zugpunkteinstellung vorzunehmen, um Wechselwirkungen zwischen einer Änderung der Vorderfurchenbreiteneinstellung basierend auf der zumindest einen Korrektureinstellung und der bestehenden Zugpunkteinstellung zu berücksichtigen.

Die der Erfindung zugrundeliegende Aufgabe wird ferner durch einen Maschinenverbund der eingangs genannten Art gelöst, wobei die Steuerungsvorrichtung des erfindungsgemäßen Maschinenverbunds nach einer der vorstehend beschriebenen Ausführungsformen ausgebildet ist. Auf die erfindungsmäßen Vorteile der Steuerungsvorrichtung darf verwiesen werden.

Die vorliegende Erfindung wird nachstehend anhand eines in den Zeichnungen dargestellten Ausführungsbeispieles näher erläutert.
- Fig. 1: schematisch und exemplarisch eine Draufsicht auf einen Maschinenverbund;
- Fig. 2: schematisch und exemplarisch eine rückwärtige Ansicht eines Maschinenverbundes; und
- Fig. 3: schematisch und exemplarisch eine Ansicht eines durch eine Sensoranordnung aufgespannten Erfassungsbereichs.

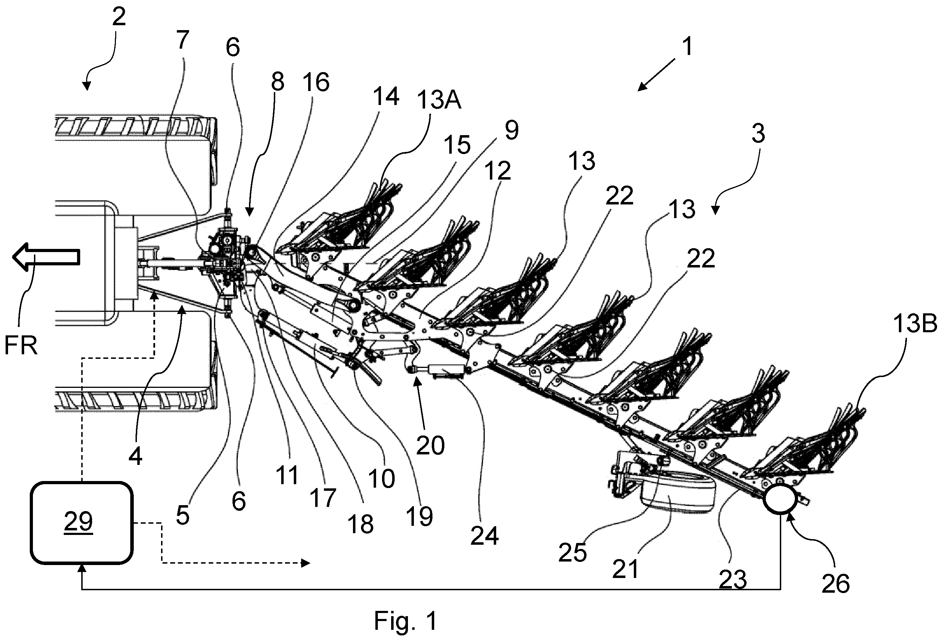

Fig. 1 zeigt schematisch und exemplarisch eine Draufsicht auf einen Maschinenverbund 1. Der Maschinenverbund 1 umfasst ein Zugfahrzeug 2 und einen von dem Zugfahrzeug 2 gezogenen landwirtschaftlichen Pflug 3, hier beispielhaft einen Anbaudrehpflug. Das Zugfahrzeug 2 ist bevorzugt als Traktor ausgebildet.

Der Pflug 3 ist mittels einer als Dreipunktkraftheber ausgebildeten Geräteschnittstelle 4 am Zugfahrzeug 2 angeordnet. Der Pflug 3 umfasst einen Pflugturm 5, der Anlenkpunkte 6, 7 für die Unterlenker und den Oberlenker der als Dreipunktkraftheber ausgebildeten Geräteschnittstelle 4 aufweist. Die Geräteschnittstelle 4 ist durch Aktuatoren, insbesondere Hydraulikzylinder, betätigbar.

Am Pflugturm 5 ist eine Wendeeinrichtung 8 angeordnet, durch welche der Pflug 3 um eine im Wesentlichen in Längsrichtung bzw. Fahrtrichtung FR des Zugfahrzeugs 2 orientierte Drehachse 9 gewendet werden kann. Die Wendeeinrichtung 8 umfasst einen Wendearm 10 sowie eine Stelleinrichtung 11, welche beispielsweise als automatischer Umschaltwendezylinder ausgebildet sein kann. Am Pflugturm 5 ist ein Pflugrahmen 12 angeordnet, welcher Bodenbearbeitungswerkzeuge 13, 13A, 13B, hier und vorzugsweise Pflugkörper, trägt. Dabei bezeichnet 13A das Bodenbearbeitungswerkzeug, welches im Fall des Pfluges 3 eine Vorderfurche VF generiert. Die Vorderfurche VF bezeichnet die erste Furche neben einer Bestandskante BK zu Beginn eines Bearbeitungsvorganges bzw. die sich einer letzten Furche 32 der vorrangegangenen Bearbeitung anschließende erste Furche der nachfolgenden Bearbeitung. Mit 13B ist das Bodenbearbeitungswerkzeug des Pfluges 3 bezeichnet, welches das in Längsrichtung des Pflugrahmens 12 gesehen letzte am Pflugrahmen 12 angeordnete Bodenbearbeitungswerkzeug ist.

Der Pflugrahmen 12 ist mit einem Lenker 14, welcher durch einen Einstelllenker 15 als Aktuator zum Pflugrahmen 12 festgesetzt ist, in seiner jeweiligen Arbeitsstellung seitlich beweglich. Der Pflugrahmen 12 ist um eine Gelenkachse 16 schwenkbar an der Wendeeinrichtung 8 durch den Wendearm 10 angelenkt. Für eine komfortable Bedienung kann der Einstelllenker 15 durch einen Hydraulikzylinder ersetzt oder mit einem solchen ergänzt werden. Der seitlich als Hebel fortgesetzte Wendearm 10 weist an der äußeren, der Drehachse 9 abgewandten Seite einen Gelenkpunkt 17 auf, in welchem ein vorzugsweise als Hydraulikzylinder ausgebildetes Stellmittel 18 seitens der Wendeeinrichtung 8 mit einem Ende eingehängt ist. Das andere Ende des Stellmittels 18 ist gelenkig an einem Gelenkpunkt 19 des Wendearms 10 direkt oder mittelbar über eine Schnittbreiteneinstelleinrichtung 20 mit dem Pflugrahmen 12 verbunden. Am hinteren Ende des Pflugrahmens 12 sind ein oder mehrere Stützräder 21 zur Tiefenführung des Pfluges 3 bzw. seiner Bodenbearbeitungswerkzeuge 13, 13A, 13B angebracht.

Im dargestellten Ausführungsbeispiel ist der Pflug 3 mit der variablen Schnittbreiteneinstelleinrichtung 20 versehen. Hierzu sind die jeweiligen Bodenbearbeitungswerkzeuge 13, 13A, 13B mit jeweils einer Schwenkachse 22 seitlich schwenkbar am Pflugrahmen 12 befestigt. Mittels einer Steuerstange 23 können die Bodenbearbeitungswerkzeuge 13, 13A, 13B parallel zueinander und relativ zum Pflugrahmen 12 in ihrem Schwenkwinkel eingestellt werden, wodurch sich die Schnittbreite der jeweiligen Bodenbearbeitungswerkzeuge 13, 13A, 13B ändert. Die als Mehrgelenksgetriebe ausgebildete Schnittbreiteneinstelleinrichtung 20 umfasst dabei ein längenvariables, vorzugsweise als Hydraulikzylinder ausgebildetes, Stellmittel 24. Im dargestellten Fall wirkt das Stellmittel 24 auf den Pflugrahmen 12 ein und schwenkt diesen in einem Rahmenwinkel relativ zur Fahrtrichtung FR. Durch weitere Lenker kann sich die Steuerstange 23 parallel zum Pflugrahmen 12 bewegen und dabei die als Pflugkörper ausgeführten Bodenbearbeitungswerkzeuge 13, 13A, 13B komplementär zum Rahmenwinkel relativ zum Pflugrahmen 12 neu ausrichten.

Ebenso kann das Stellmittel 24 auf die Steuerstange 23 oder auf ein mit der Steuerstange 23 verbundenes Bodenbearbeitungswerkzeug 13 einwirken und getriebetechnisch die gleiche Schnittbreiteneinstellung erzielen. Damit bei geänderter Schnittbreite und somit neuer Winkelstellung des Pflugrahmens 12 zur Fahrtrichtung FR das Stützrad 21 dennoch annähernd parallel zur Fahrtrichtung FR abrollt, ist das Stützrad 21 um eine Achse 25 schwenkbar zum Pflugrahmen 6 gelagert. Das Stützrad 21 wird entsprechend durch die Steuerstange 23 komplementär zum Rahmenwinkel des Pflugrahmens 12 ausgerichtet.

Durch die Drehung des Pflugrahmens 12 und die damit verbundene Verschwenkung der Bodenbearbeitungswerkzeuge 13, 13A, 13B kommt es zu einer Veränderung der Schnittbreite an den jeweiligen Bodenbearbeitungswerkzeuge 13, 13A, 13B und somit auch zu einer Veränderung der Arbeitsbreite. Durch eine Parallelverschiebung und/oder eine Verschiebung quer zur Arbeits- bzw. Fahrtrichtung FR des Pflugrahmens 12 kann eine Korrektur der Vorderfurchenbreite erfolgen.

Dem Zugfahrzeug 2 und/oder dem Pflug 3 ist eine Steuerungsvorrichtung 29 zugeordnet. Die Steuerungsvorrichtung 29 ist dazu eingerichtet und ausgeführt, die Aktuatoren der Geräteschnittstelle 4 sowie die Aktuatoren des Pfluges 3, d.h. zumindest des Einstelllenkers 15, des Stellmittels 18 sowie des Stellmittels 24, anzusteuern.

So werden die Aktuatoren zur Einstellung verschiedener Arbeitseinstellungen, wie Vorderfurchenbreite bzw. dem Abstand zwischen der Reifenkante des Zugfahrzeugs und der Furchenkante, von der Steuerungsvorrichtung 29 angesteuert.

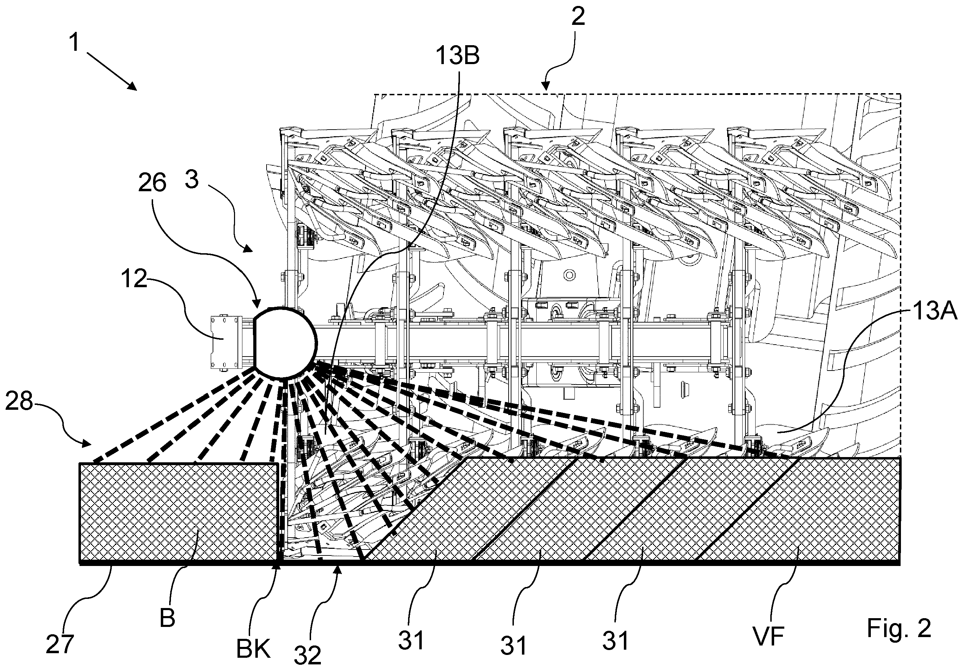

Die Darstellung in Fig. 2 zeigt schematisch und exemplarisch eine rückwärtige Ansicht eines Maschinenverbundes 1 in der Furchenarbeitsposition. Am Pflugrahmen 12 ist endseitig zumindest eine Sensoranordnung 26 angeordnet. Die zumindest eine, insbesondere genau eine, Sensoranordnung 26 ist dem, in Längsrichtung des Pflugrahmens 12 gesehen, letzten Bodenbearbeitungswerkzeug 13B nachgeordnet an dem Pflugrahmen 12 angeordnet. Die zumindest eine Sensoranordnung 26 ist zur Bodenoberfläche 27 beabstandet angeordnet. Durch die zumindest eine Sensoranordnung 26 wird ein der Bodenoberfläche 27 zugewandter flächenförmiger Erfassungsbereich 28 aufgespannt. Innerhalb des Erfassungsbereiches 28 werden an zumindest zwei beabstandeten Messpunkten Messdaten durch die Sensoranordnung 26 generiert. Durch eine Vielzahl an Messpunkten und entsprechender Messdaten kann ein Erfassungsbereich 28 im Wesentlichen flächig erfasst werden.

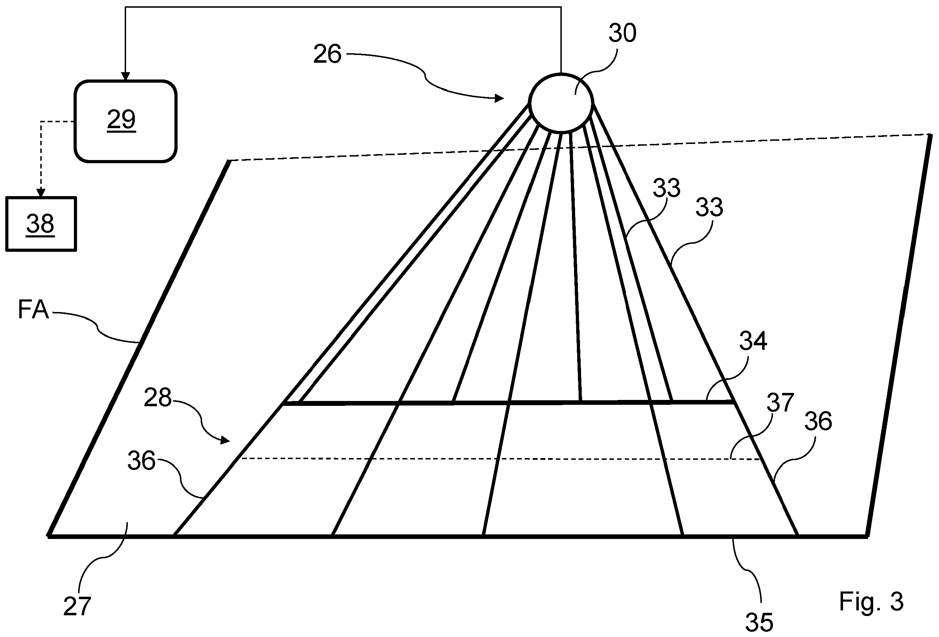

Die Darstellung in Fig. 3 zeigt schematisch und exemplarisch eine Ansicht des durch die Sensoranordnung 29 auf einem Feldabschnitt FA aufgespannten Erfassungsbereiches 28. Von der Sensoranordnung 29 ausgehende bzw. ausgesandte Sensorsignale 33 decken einen Erfassungsbereich zwischen einer vorderen Erfassungsbereichsgrenze 34 und einer hinteren Erfassungsbereichsgrenze 35 des Erfassungsbereiches 28 ab, die sich jeweils quer zur Fahrtrichtung FR erstrecken. Lateral wird der Erfassungsbereich 28 durch sich in Fahrtrichtung FR erstreckende, zueinander im Wesentlichen parallel verlaufende Erfassungsbereichsgrenzen 36 beschränkt.

Die zumindest eine Sensoranordnung 26 weist wenigstens einen berührungslos arbeitenden Sensor 30 auf. Durch den wenigstens einen Sensor 30 wird der flächenförmige Erfassungsbereich 28 erzeugt. Als zumindest ein berührungslos arbeitender Sensor 30 kann ein LiDAR-Sensor, ein Radar-Sensor, eine Kamera und/oder ein Ultraschallsensor verwendet werden. Der flächenförmige Erfassungsbereich 28 erstreckt sich abschnittsweise entgegen der Fahrtrichtung FR sowie quer hierzu, um eine rückschauende Betrachtung des Bearbeitungsergebnisses zu ermöglichen.

Der flächenförmige Erfassungsbereich 28 erstreckt sich quer zur Fahrtrichtung FR - im dargestellten Ausführungsbeispiel von links nach rechts - gesehen von einem unbearbeiteten Bodenabschnitt B mit einer im Wesentlichen vertikalen Bodenkante BK oder Bestandskante bis zur äußersten respektive letzten Furche 32, die durch die Bearbeitung durch das Bodenbearbeitungswerkzeug 13B erzeugt wird. Zwischen der letzten Furche 32 und der Vorderfurche VF befinden sich Furchen 31, die ebenfalls vom flächenförmigen Erfassungsbereich 28 erfasst werden.

Innerhalb des Erfassungsbereiches 28 wird zumindest ein Bearbeitungsergebnis detektiert. Als ein Bearbeitungsergebnis wird die Vorderfurchenbreite bestimmt.

Die Vorderfurchenbreite, auch "Anschnitt" genannt, soll im Allgemeinen so eingestellt werden, dass das erste Bodenbearbeitungswerkzeug 13A respektive der erste Pflugkörper exakt dieselbe Breite schneidet, wie auch alle restlichen Bodenbearbeitungswerkzeuge 13, 13B respektive Pflugkörper. Die korrekte Einstellung der Vorderfurchenbreite und der dadurch generierten Vorderfurche VF sorgt für ebenen Boden.

Aufgrund der Vielzahl unterschiedlicher Zugfahrzeug-Pflugkombinationen und verschieden einstellbarer Arbeits- bzw. Schnittbreiten und der daraus resultierenden Vielzahl an Vorderfurchenbreiten kann es zudem vorgesehen sein, die Breite der Vorderfurche VF gesondert zu den Breiten der anderen Furchen 31 einzustellen. Hierzu kann das erste Bodenbearbeitungswerkzeug 13A unabhängig von den anderen Bodenbearbeitungswerkzeugen 13, 13B durch eine Aktuatorik angesteuert werden.

Eine inkorrekte Einstellung der Vorderfurchenbreite führt zu Unregelmäßigkeiten zwischen der durch das letzte Bodenbearbeitungswerkzeug 13B erzeugten Furche 32 einer vorangehend abgefahrenen Bahn und der benachbarten Vorderfurche VF einer nachfolgend abgefahrenen Bahn. Ein Tal als Unregelmäßigkeit entsteht, wenn die Vorderfurchenbreite zu breit bzw. zu groß eingestellt ist. Eine Erhebung als Unregelmäßigkeit entsteht, wenn die Vorderfurchenbreite zu schmal bzw. zu klein eingestellt ist.

Von der Sensoranordnung 26 werden Messdaten an die Steuerungsvorrichtung 29 des Zugfahrzeuges 2 und/oder des Pfluges 3 zur Auswertung durch einen Auswertealgorithmus übermittelt oder von der Steuerungsvorrichtung 29 abgerufen. Durch den in der Steuerungsvorrichtung 29 hinterlegten oder hinterlegbaren Auswertealgorithmus wird die Bestimmung der zumindest einen Korrektureinstellung durchgeführt, die zur Ansteuerung der Aktuatoren des Zugfahrzeuges 2 und/oder des Pfluges 3 verwendet wird. Auf Basis der zumindest einen Korrektureinstellung generierte Steuersignale werden von der Steuerungsvorrichtung 29 an die Aktuatoren oder diesen zugeordneten Steuereinheiten übertragen, um die Vorderfurchenbreite zu korrigieren. Dies kann automatisch erfolgen oder durch eine manuelle Freigabe eines Bedieners.

Weitere Bearbeitungsergebnisse, die durch die Sensoranordnung 26 bestimmbar sind, können Bodenrauheit und/oder Bodenebenheit sein. Weiterhin können die Bestandskante BK und/oder eine Furchenkante als Bearbeitungsergebnisse bestimmt werden.

Die Bestimmung der Furchenkante als Bearbeitungsergebnisse kann zur Unterstützung der Bestimmung einer aktuellen Position des Zugfahrzeuges 2 auf der landwirtschaftlichen Nutzfläche mittels eines Odometriesystems verwendet werden.

Durch den in der Steuerungsvorrichtung 29 hinterlegten Auswertealgorithmus wird ein Ist-Profil zweier unmittelbar benachbarter Furchen bestimmt, wobei die eine Furche die durch das letzte Bodenbearbeitungswerkzeug 13B erzeugte Furche einer vorangehenden Bahn bei einer Hinfahrt und die andere Furche die durch das erste Bodenbearbeitungswerkzeug 13A erzeugte Vorderfurche VF bei einer Retourfahrt ist.

Das detektierte Ist-Profil kann als grafisches 3D-Profil und/oder numerisch wiedergegeben werden. Zur Auswertung wird das detektierte Ist-Profil mit zumindest einem in der Steuerungsvorrichtung 29 hinterlegten Soll-Profil gleicher Ausprägung verglichen. Durch den Vergleich des Ist-Profils mit dem in der Steuerungsvorrichtung 29 hinterlegten Soll-Profil kann auf Unregelmäßigkeiten geschlossen werden.

Für die Auswertung und Vergleichbarkeit kann für das mittels der zumindest einen Sensoranordnung 26 detektierte Ist-Profil zur numerischen Wiedergabe ein Zahlenwert durch die Steuerungsvorrichtung 29 berechnet werden. Der Zahlenwert kann die Regelmäßigkeit bzw. Unregelmäßigkeit der durchgeführten Bearbeitung angeben. Das Vorzeichen des Zahlenwertes kann die Situation an der Vorderfurche VF widerspiegeln, ob eine Erhebung oder ein Tal als Unregelmäßigkeit vorliegt. Der absolute Wert kann das Ausmaß der Erhebung bzw. des Tals wiedergeben.

Alternativ oder zusätzlich kann bei einer grafischen Wiedergabe des Ist-Profils als 3D-Profil ein zu erwartendes Ergebnis, welches durch die zur generierten Vorderfurche VF benachbarten Furchen 31 bekannt ist, mit dem tatsächlichen Ergebnis der Vorderfurche VF verglichen werden.

Ein weiterer Aspekt ist, dass durch die zumindest eine Sensoranordnung 29 zugleich eine Bestimmung der Neigung des Pflugrahmens 12 zur Bodenoberfläche 27 durchgeführt wird.

Die Bestimmung der Neigung des Pflugrahmens 12 zur Bodenoberfläche 27 sieht eine Bestimmung der Seitenneigung des Zugfahrzeuges 2 und/oder des Pfluges 3, d.h. der Neigung quer zur Fahrtrichtung FR vor. Weiterhin umfasst die Bestimmung der Neigung eine Bestimmung der Längsneigung des Zugfahrzeuges 2 und/oder des Pfluges 3 in Fahrtrichtung FR gesehen. Die Bestimmung der Seitenneigung dient ebenfalls dazu, eine Korrektureinstellung zu bestimmen, um die Aktuatoren des Zugfahrzeuges 2 und/oder des Pfluges 3 anzusteuern. Dies dient dazu, dass mit einer Seitenneigung von 90° zur Bodenoberfläche 27 gepflügt wird. Die Anpassung bzw. Korrektur der Längsneigung durch die Ansteuerung der Aktuatoren auf Basis einer Korrektureinstellung kann ebenfalls erforderlich sein bzw. werden, um unterschiedliche Arbeitstiefen der in Längsrichtung versetzt hintereinander angeordneten Bodenbearbeitungswerkzeuge 13A, 13, 13B zu vermeiden. Sind die Bodenbearbeitungswerkzeuge 13A, 13, 13B in Quer- und /oder Längsrichtung nicht senkrecht zur Bodenoberfläche 27 orientiert, führt dies zu ungleichen Arbeitstiefen der Bodenbearbeitungswerkzeuge 13A, 13, 13B.

So kann eine Seitenneigung des Zugfahrzeuges 2 und/oder des Pfluges 3 bestimmt werden, indem die Auswertung eines linienförmigen Abschnitts 37, wie in Fig. 3 angedeutet, innerhalb des Erfassungsbereiches 28 oder des flächenförmigen Erfassungsbereiches 28 als Ganzem durchgeführt wird. Der linienförmige Abschnitt 37 kann auch mit den Erfassungsbereichsgrenzen 34, 35 zusammenfallen.

Die Längsneigung des Zugfahrzeuges 2 und/oder des Pfluges 3 in Fahrtrichtung FR wird durch eine Laufzeitmessung der von der Sensoranordnung 26 ausgesandten Sensorsignale 33 bestimmt.

Gemäß einem weiteren Aspekt kann die Steuerungsvorrichtung 29 dazu eingerichtet sein, Einstellempfehlungen zu generieren, die an eine Bedieneinheit 38 auf dem Zugfahrzeug 2 übertragen und durch diese visualisiert werden. Dies ermöglicht es dem Bediener des Maschinenverbundes 1 Einstellungen vorzunehmen, durch welche die jeweiligen Aktuatoren angesteuert werden, um das Bearbeitungsergebnis zu optimieren.

**Bezugszeichenliste**

| | | | |
|---|---|---|---|
| 1 | Maschinenverbund | 31 | Furche |
| 2 | Zugfahrzeug | 32 | Furche |
| 3 | Pflug | 33 | Sensorsignal |
| 4 | Geräteschnittstelle | 34 | Vordere Erfassungsbereichsgrenze |
| 5 | Pflugturm | 35 | Hintere Erfassungsbereichsgrenze |
| 6 | Anlenkpunkt | 36 | Laterale Erfassungsbereichsgrenze |
| 7 | Anlenkpunkt | 37 | Linienförmiger Abschnitt |
| 8 | Wendeeinrichtung | 38 | Bedieneinheit |
| 9 | Drehachse | | |
| 10 | Wendearm | B | Bodenabschnitt |
| 11 | Stelleinrichtung | BK | Bestandskante |
| 12 | Pflugrahmen | FA | Feldabschnitt |
| 13 | Bodenbearbeitungswerkzeug | FR | Fahrtrichtung |
| 13A | Bodenbearbeitungswerkzeug | | |
| 13B | Bodenbearbeitungswerkzeug | | |
| 14 | Lenker | | |
| 15 | Einstelllenker | | |
| 16 | Gelenkachse | | |
| 17 | Gelenkpunkt | | |
| 18 | Stellmittel | | |
| 19 | Gelenkpunkt | | |
| 20 | Schnittbreiteneinstelleinrichtung | | |
| 21 | Stützrad | | |
| 22 | Schwenkachse | | |
| 23 | Steuerstange | | |
| 24 | Stellmittel | | |
| 25 | Achse | | |
| 26 | Sensoranordnung | | |
| 27 | Bodenoberfläche | | |
| 28 | Erfassungsbereich | | |
| 29 | Steuerungsvorrichtung | | |
| 30 | Sensor | | |

## Patentansprüche

1. Verfahren zum Ermitteln zumindest einer Korrektureinstellung für einen von einem Zugfahrzeug (2) gezogenen, einen Pflugrahmen (12) und daran angeordnete Bodenbearbeitungswerkzeuge (13, 13A, 13B) umfassenden landwirtschaftlichen Pflug (3) während einer Bodenbearbeitung auf einer landwirtschaftlichen Nutzfläche, **gekennzeichnet durch** die Verfahrensschritte:
- Detektion zumindest eines durch die Bodenbearbeitungswerkzeuge (13, 13A, 13B) hervorgerufenen Bearbeitungsergebnisses und Detektion einer Neigung des Pflugrahmens (12) zur Bodenoberfläche (27) durch zumindest eine endseitig am Pflugrahmen (12) angeordnete Sensoranordnung (26), welche dem, in Längsrichtung des Pflugrahmens (12) gesehen, letzten Bodenbearbeitungswerkzeug (13B) nachgeordnet ist, wobei durch die zumindest eine Sensoranordnung (26) ein der Bodenoberfläche (27) zugewandter flächenförmiger Erfassungsbereich (28) aufgespannt wird,
- Generieren von Messdaten an zumindest zwei beabstandeten Messpunkten innerhalb des Erfassungsbereichs (28),
- Zuführen der Messdaten an eine Steuerungsvorrichtung (29) des Zugfahrzeuges (2) und/oder des Pfluges (3), und
- Auswertung der Messdaten durch einen Auswertealgorithmus und zur Bestimmung der zumindest einen Korrektureinstellung.

2. Verfahren nach Anspruch 1, **dadurch gekennzeichnet, dass** die zumindest eine Korrektureinstellung zur Ansteuerung von Aktuatoren des Zugfahrzeuges (2) und/oder des Pfluges (3) verwendet wird.

3. Verfahren nach Anspruch 1 oder 2, **dadurch gekennzeichnet, dass** eine Vorderfurchenbreite als ein Bearbeitungsergebnis bestimmt wird.

4. Verfahren nach einem der Ansprüche 1 bis 3, **dadurch gekennzeichnet, dass** Bodenrauheit und/oder Bodenebenheit als ein Bearbeitungsergebnis bestimmt wird.

5. Verfahren nach einem der vorangehenden Ansprüche, **dadurch gekennzeichnet, dass** eine Bestandskante (BK) und/oder eine Furchenkante bestimmt wird.

6. Verfahren nach Anspruch 5, **dadurch gekennzeichnet, dass** die Bestimmung der Furchenkante zur Unterstützung der Bestimmung einer aktuellen Position des Zugfahrzeuges (2) auf der landwirtschaftlichen Nutzfläche mittels eines Odometriesystems verwendet wird.

7. Verfahren nach einem der vorangehenden Ansprüche, **dadurch gekennzeichnet, dass** durch die zumindest eine Sensoranordnung (26) eine Seitenneigung des Zugfahrzeuges (2) und/oder des Pfluges (3) bestimmt wird.

8. Verfahren nach Anspruch 7, **dadurch gekennzeichnet, dass** die Bestimmung der Seitenneigung durch Auswertung eines punktförmigen und/oder linienförmigen Abschnitts (37) innerhalb des Erfassungsbereiches (28) oder des flächenförmigen Erfassungsbereiches (28) durchgeführt wird.

9. Verfahren nach einem der vorangehenden Ansprüche, **dadurch gekennzeichnet, dass** durch die zumindest eine Sensoranordnung (26) eine Längsneigung des Zugfahrzeuges (2) und/oder des Pfluges (3) in Fahrtrichtung (FR) bestimmt wird.

10. Verfahren nach Anspruch 9, **dadurch gekennzeichnet, dass** die Bestimmung der Längsneigung in Fahrtrichtung (FR) mittels einer Laufzeitmessung von Sensorsignalen (33), die von der zumindest einen Sensoranordnung (26) ausgesandt werden, durchgeführt wird.

11. Verfahren nach einem der vorangehenden Ansprüche, **dadurch gekennzeichnet, dass** die zumindest eine Sensoranordnung (26) zumindest einen berührungslos arbeitenden Sensor (30) aufweist, durch welchen ein linienförmiger und/oder der flächenförmige Erfassungsbereich (28) erzeugt wird.

12. Verfahren nach Anspruch 11, **dadurch gekennzeichnet, dass** als zumindest ein berührungslos arbeitender Sensor (30) ein LiDAR-Sensor, ein Radar-Sensor, eine Kamera und/oder ein Ultraschallsensor verwendet wird.

13. Verfahren nach einem der vorangehenden Ansprüche, **dadurch gekennzeichnet, dass** durch den Auswertealgorithmus ein Ist-Profil zweier unmittelbar benachbarter Furchen bestimmt wird, wobei eine Furche eine Vorderfurche (VF) und die andere Furche eine durch das letzte Bodenbearbeitungswerkzeug (13B) erzeugte Furche (32) einer vorangehenden Bahn ist.

14. Verfahren nach Anspruch 13, **dadurch gekennzeichnet, dass** das detektierte Ist-Profil als grafisches 3D-Profil und/oder numerisch wiedergegeben wird, welches mit zumindest einem in der Steuerungsvorrichtung (29) hinterlegten Soll-Profil gleicher Ausprägung verglichen wird.

15. Steuerungsvorrichtung (29) zum Einstellen zumindest einer Korrektureinstellung für einen von einem Zugfahrzeug (2) gezogenen, einen Pflugrahmen (12) und daran angeordnete Bodenbearbeitungswerkzeuge (13, 13A, 13B) umfassenden landwirtschaftlichen Pflug (3) während der Bodenbearbeitung auf einer landwirtschaftlichen Nutzfläche, **dadurch gekennzeichnet, dass** zumindest eine endseitig am Pflugrahmen (12) angeordnete Sensoranordnung (26), welche dem, in Längsrichtung des Pflugrahmens (12) gesehen, letzten Bodenbearbeitungswerkzeug (13B) nachgeordnet ist, wobei die zumindest eine Sensoranordnung (26) dazu eingerichtet ist, einen der Bodenoberfläche (27) zugewandten flächenförmigen Erfassungsbereich (28) zur Detektion zumindest eines durch die Bodenbearbeitungswerkzeuge (13, 13A, 13B) hervorgerufenen Bearbeitungsergebnisses und zur Detektion einer Neigung des Pflugrahmens (12) zur Bodenoberfläche (27) aufzuspannen, wobei innerhalb des Erfassungsbereiches (28) an zumindest zwei beabstandeten Messpunkten Messdaten generiert werden, und die Messdaten der Steuerungsvorrichtung (29) des Zugfahrzeuges (2) und/oder des Pfluges (3) zur Auswertung durch einen Auswertealgorithmus und zur Bestimmung der zumindest einen Korrektureinstellung zuzuführen.

16. Steuerungsvorrichtung (29) nach Anspruch 15, **dadurch gekennzeichnet, dass** die Steuerungsvorrichtung (29) dazu eingerichtet ist, das Verfahren zum Ermitteln von zumindest einer Korrektureinstellung für einen Pflug (3) nach einem der Ansprüche 1 bis 14 auszuführen.

17. Maschinenverbund (1) aus einem landwirtschaftlichen Pflug (3) und einem Zugfahrzeug (2), welches dazu eingerichtet ist, den Pflug (3) während einer Bodenbearbeitung auf einer landwirtschaftlichen Nutzfläche zu ziehen, mit einer Steuerungsvorrichtung (29) zum Einstellen von zumindest einer Korrektureinstellung an dem Pflug (3) und/oder dem Zugfahrzeug (2), **dadurch gekennzeichnet, dass** die Steuerungsvorrichtung (29) nach Anspruch 15 oder 16 ausgebildet ist.

## Claims

1. A method for determining at least one correction setting for an agricultural plow (3)-which is towed by a towing vehicle (2) and comprises a plow frame (12) and soil-working tools (13, 13A, 13B) mounted thereon-during soil cultivation on an agricultural field, **characterized by** the following method steps:
- detecting at least one tillage result caused by the soil-working tools (13, 13A, 13B) and detection of an inclination of the plow frame (12) relative to the soil surface (27) by at least one sensor arrangement (26) arranged at an end of the plow frame (12), which is located downstream of the last soil-working tool (13B), wherein the at least one sensor arrangement (26) spans a planar detection area (28) facing the soil surface (27),
- generating measurement data at at least two spaced-apart measurement points within the detection area (28),
- supplying the measurement data to a control device (29) of the towing vehicle (2) and/or the plow (3), and
- Evaluating the measurement data using an evaluation algorithm and to determine the at least one correction setting.

2. Method according to claim 1, **characterized in that** the at least one correction setting is used to control actuators of the towing vehicle (2) and/or the plow (3).

3. A method according to claim 1 or 2, **characterized in that** a front furrow width is determined as a processing result.

4. A method according to any one of claims 1 through 3, **characterized in that** ground roughness and/or ground flatness is determined as a result of the machining process.

5. A method according to any one of the preceding claims, **characterized in that** a ground edge (BK) and/or a furrow edge is determined.

6. A method according to claim 5, **characterized in that** the determination of the furrow edge is used to assist in determining a current position of the towing vehicle (2) on the agricultural land by means of an odometry system.

7. A method according to any one of the preceding claims, **characterized in that** the at least one sensor arrangement (26) determines a lateral inclination of the towing vehicle (2) and/or the plow (3).

8. A method according to claim 7, **characterized in that** the determination of the lateral inclination is performed by evaluating a point-shaped and/or line-shaped section (37) within the detection area (28) or the area-shaped detection area (28).

9. A method according to one of the preceding claims, **characterized in that** the at least one sensor array (26) determines a longitudinal inclination of the towing vehicle (2) and/or the plow (3) in the direction of travel (FR).

10. A method according to claim 9, **characterized in that** the determination of the longitudinal inclination in the direction of travel (FR) is performed by means of a time-of-flight measurement of sensor signals (33) emitted by the at least one sensor arrangement (26).

11. A method according to one of the preceding claims, **characterized in that** the at least one sensor arrangement (26) comprises at least one non-contact sensor (30) by means of which a linear and/or planar detection area (28) is generated.

12. The method according to claim 11, **characterized in that** a LiDAR sensor, a radar sensor, a camera, and/or an ultrasonic sensor is used as at least one non-contact sensor (30).

13. A method according to any one of the preceding claims, **characterized in that** the evaluation algorithm determines an actual profile of two immediately adjacent furrows, wherein one furrow is a leading furrow (VF) and the other furrow is a furrow (32) of a track preceding a " " (reverse furrow) produced by the last soil-working implement (13B).

14. A method according to claim 13, **characterized in that** the detected actual profile is represented as a graphical 3D profile and/or numerically, which is compared with at least one target profile of the same configuration stored in the control device (29).

15. Control device (29) for adjusting at least one correction setting for an agricultural plow (3) comprising a plow frame (12) and soil-working tools (13, 13A, 13B) while tilling the soil on an agricultural field, **characterized in that** at least one sensor assembly (26) is arranged at an end of the plow frame (12) and is positioned downstream of the last soil-working tool (13B) when viewed in the longitudinal direction of the plow frame (12), wherein the at least one sensor arrangement (26) is configured to define a planar detection area (28) facing the soil surface (27) for detecting at least one of the working results caused by the soil-working tools (13, 13A, 13B) and for detecting an inclination of the plow frame (12) relative to the soil surface (27), wherein measurement data is generated at at least two spaced-apart measurement points within the detection area (28), and the measurement data is supplied to the control device (29) of the towing vehicle (2) and/or the plow (3) for evaluation by an evaluation algorithm and for determining the at least one correction setting.

16. Control device (29) according to claim 15, **characterized in that** the control device (29) is configured to perform the method for determining at least one correction setting for a plow (3) according to one of claims 1 to 14.

17. A machine combination (1) comprising an agricultural plow (3) and a towing vehicle (2), which is configured to pull the plow (3) during soil cultivation on an agricultural field, comprising a control device (29) for adjusting at least one correction setting on the plow (3) and/or the towing vehicle (2), **characterized in that** the control device (29) is configured according to claim 15 or 16.

## Revendications

1. Procédé permettant de déterminer au moins un réglage de correction pour une charrue agricole (3) tractée par un véhicule tracteur (2), comprenant un châssis de charrue (12) et des outils de travail du sol (13, 13A, 13B) disposés sur celui-ci, pendant un travail du sol sur une parcelle agricole, **caractérisé par** les étapes suivantes :
- la détection d'au moins un résultat de travail provoqué par les outils de travail du sol (13, 13A, 13B) et la détection d'une inclinaison du châssis de charrue (12) par rapport à la surface du sol (27) par au moins un dispositif de capteurs (26) disposé à l'extrémité du châssis de charrue (12), lequel est placé en aval du dernier outil de travail du sol (13B) vu dans la direction longitudinale du châssis de charrue (12), un zone de détection (28) en forme de surface, tourné vers la surface du sol (27), étant défini par ledit au moins un dispositif de capteurs (26),
- génération de données de mesure en au moins deux points de mesure espacés à l'intérieur de la zone de détection (28),
- transmission des données de mesure à un dispositif de commande (29) du véhicule tracteur (2) et/ou de la charrue (3), et
- Évaluation des données de mesure par un algorithme d'évaluation et pour déterminer le ou les réglages de correction.

2. Procédé selon la revendication 1, **caractérisé en ce que** le au moins un réglage de correction est utilisé pour commander des actionneurs du véhicule tracteur (2) et/ou de la charrue (3).

3. Procédé selon la revendication 1 ou 2, **caractérisé en ce qu'**une largeur de sillon avant est déterminée comme résultat du travail.

4. Procédé selon l'une des revendications 1 à 3, **caractérisé en ce que** la rugosité et/ou la planéité du sol sont déterminées en tant que résultat de l'usinage.

5. Procédé selon l'une des revendications précédentes, **caractérisé en ce qu'**un bord existant (BK) et/ou un bord de sillon est déterminé.

6. Procédé selon la revendication 5, **caractérisé en ce que** la détermination du bord de sillon est utilisée pour faciliter la détermination d'une position actuelle du véhicule tracteur (2) sur la surface agricole utile au moyen d'un système d'odométrie.

7. Procédé selon l'une des revendications précédentes, **caractérisé en ce qu'**une inclinaison latérale du véhicule tracteur (2) et/ou de la charrue (3) est déterminée par ledit au moins un dispositif de capteurs (26).

8. Procédé selon la revendication 7, **caractérisé en ce que** la détermination de l'inclinaison latérale est effectuée par l'évaluation d'une section ponctuelle et/ou linéaire (37) à l'intérieur de la zone de détection (28) ou de la zone de détection plane (28).

9. Procédé selon l'une des revendications précédentes, **caractérisé en ce qu'**une inclinaison longitudinale du véhicule tracteur (2) et/ou de la charrue (3) dans le sens de la marche (FR) est déterminée par ledit au moins un dispositif de capteurs (26).

10. Procédé selon la revendication 9, **caractérisé en ce que** la détermination de l'inclinaison longitudinale dans le sens de la marche (FR) est effectuée au moyen d'une mesure du temps de propagation de signaux de capteur (33) émis par ledit au moins un dispositif de capteurs (26).

11. Procédé selon l'une des revendications précédentes, **caractérisé en ce que** le au moins un dispositif de capteurs (26) comporte au moins un capteur (30) fonctionnant sans contact, par lequel est générée une zone de détection (28) linéaire et/ou en forme de surface.

12. Procédé selon la revendication 11, **caractérisé en ce qu'**on utilise, comme au moins un capteur sans contact (30), un capteur LiDAR, un capteur radar, une caméra et/ou un capteur à ultrasons.

13. Procédé selon l'une des revendications précédentes, **caractérisé en ce que** l'algorithme d'évaluation détermine un profil réel de deux sillons immédiatement adjacents, un sillon étant un sillon avant (VF) et l'autre sillon étant un sillon (32) d'une trajectoire précédant l' , généré par le dernier outil de travail du sol (13B).

14. Procédé selon la revendication 13, **caractérisé en ce que** le profil réel détecté est représenté sous forme de profil graphique en 3D et/ou sous forme numérique, lequel est comparé à au moins un profil de consigne de même configuration enregistré dans le dispositif de commande (29).

15. Dispositif de commande (29) destiné à régler au moins un paramètre de correction pour une charrue agricole (3) tractée par un véhicule tracteur (2), comprenant un châssis de charrue (12) et des outils de travail du sol (13, 13A, 13B) pendant le travail du sol sur une surface agricole, **caractérisé en ce qu'**au moins un ensemble de capteurs (26), disposé à l'extrémité du châssis de charrue (12) et situé, vu dans le sens longitudinal du châssis de charrue (12), en aval du dernier outil de travail du sol (13B), cet au moins un dispositif de capteurs (26) étant conçu pour définir une zone de détection (28) en forme de surface tournée vers la surface du sol (27) afin de détecter au moins un résultat de travail provoqué par les outils de travail du sol (13, 13A, 13B) et de détecter une inclinaison du châssis de charrue (12) par rapport à la surface du sol (27), des données de mesure étant générées à l'intérieur de la zone de détection (28) en au moins deux points de mesure espacés, et les données de mesure sont transmises au dispositif de commande (29) du véhicule tracteur (2) et/ou de la charrue (3) en vue de leur évaluation par un algorithme d'évaluation et de la détermination dudit au moins un réglage de correction.

16. Dispositif de commande (29) selon la revendication 15, **caractérisé en ce que** le dispositif de commande (29) est agencé pour exécuter le procédé de détermination d'au moins un réglage de correction pour une charrue (3) selon l'une des revendications 1 à 14.

17. Ensemble de machines (1) composé d'une charrue agricole (3) et d'un véhicule tracteur (2), lequel est conçu pour tracter la charrue (3) lors d'un travail du sol sur une parcelle agricole, comprenant un dispositif de commande (29) destiné à régler au moins un paramètre de correction sur la charrue (3) et/ou le véhicule tracteur (2), **caractérisé en ce que** le dispositif de commande (29) est conçu selon la revendication 15 ou 16.
